# EUROPÄISCHE PATENTSCHRIFT

(11) **EP 1 546 583 B1**
(45) Veröffentlichungstag und Bekanntmachung des Hinweises auf die Patenterteilung: **16.02.2011**
(21) Anmeldenummer: 03769199.5
(22) Anmeldetag: 18.09.2003
(51) Int. Cl.: F16H 63/38

(54) **Führungsmechanismus für eine Schaltbewegung in einem Schaltgetriebe**
GUIDING MECHANISM FOR GEAR SHIFTING IN A GEAR-BOX
MECANISME DE GUIDAGE DESTINE AU CHANGEMENT DE VITESSE D'UNE BOITE DE VITESSES

(30) Priorität: 21.09.2002 DE 10244013
(43) Veröffentlichungstag der Anmeldung: 29.06.2005
(73) Patentinhaber: GM Global Technology Operations, Inc., Detroit, MI 48265-3000 (US); FIAT AUTO S.p.A., 10135 Torino (IT)
(72) Erfinder: HELDMANN, Olaf, 64572 Büttelborn (DE)
(74) Vertreter: Strauss, Peter
(86) Internationale Anmeldenummer: PCT/DE2003/003095
(87) Internationale Veröffentlichungsnummer: WO 2004/029486

(56) Entgegenhaltungen:
- EP-A- 0 999 384
- EP-A- 1 036 962
- DE-A- 4 110 555
- DE-A- 19 942 562
- US-A- 3 602 245
- US-A- 5 979 262
- US-A1- 2001 017 063

## Beschreibung

Die Erfindung betrifft einen Führungsmechanismus für eine Schaltbewegung in einem Schaltgetriebe mit einer entlang vordefinierter Wege drehbaren und axial verschiebbaren Welle, einer die Welle wenigstens teilweise umgebenden Hülse sowie einem an der Welle montierten und entsprechend der Bewegung der Welle entlang diese Wege definierender Konturen der Hülse bewegbaren Führungselement. Ein solcher Führungsmechanismus lässt sich in einem Schaltgetriebe eines Kraftfahrzeuges einsetzen.

Die Führungsmechanismen bekannter Schaltgetriebe umfassen gewöhnlich eine beweglich gelagerte Welle und eine die Welle wenigstens teilweise umgebende Hülse. Die Welle ist dabei auf vorgegebenen Laufwegen beweglich, um verschiedene vorgegebene Schaltstellungen einnehmen zu können. Üblicherweise sind an der Hülse miteinander verbundene bzw. sich kreuzende Schlitze vorgesehen, die in ihrer Form und Ausrichtung die Wege definieren, auf denen die Welle bewegbar ist. Man spricht hier auch von einer Kulisse. Als Führungselement dient ein starr an der Welle befestigter Stift, auch als Kulissenstift bezeichnet, der in die Schlitze der Kulisse eingreift. Stellungen der Welle, bei denen sich der Kulissenstift am Ende eines der Schlitze befindet, entsprechen jeweils einem in dem Schaltgetriebe eingelegten Gang.

Das Schaltgetriebe verfügt auch über einen Leerlaufzustand, in dem kein Drehmoment von der Antriebs- zur Abtriebsseite des Schaltgetriebes übertragen wird. Dieser Leerlaufzustand wird eingenommen, wenn sich die Welle in einer Zwischenstellung zwischen zwei jeweils einem eingelegten Gang entsprechenden Stellungen befindet.

Um die Welle in dieser Zwischenstellung stabil zu halten, ist an der Welle ferner eine federbeaufschlagte Kugel montiert, die in Form eines Rastmittels gegen einen konturierten Bereich an der Hülse bzw. Welle drückt. Dieser Bereich ist so geformt, dass, wenn sich die Welle in besagter Zwischenstellung befindet, die Kugel gegen einen Punkt der Kontur mit lokal maximalem Radius drückt, d.h. einen Punkt, der weiter von der Achse der Welle entfernt ist als die ihn umgebenden Punkte. Hier erreicht die Feder einen Zustand maximaler Entspannung, durch den die Welle in der Zwischenstellung stabil gehalten wird.

Nach dem üblichen Führungsmechanismus sind Rastmittel und Kulisse getrennt voneinander liegende Funktionseinheiten, wobei sich das Rastmittel mit dem zugehörigen Kontur-Bereich außerhalb des Getriebes befindet und die Kulisse mit Kulissenstift in das Getriebegehäuse integriert wird. Dies hat insbesondere damit zu tun, dass man bislang davon ausgegangen ist, dass es aus Platzgründen nicht möglich ist, die Funktionseinheiten gemeinsam in kompakter Form in das Getriebegehäuse zu versenken. Dies bring allerdings den Nachteil mit sich, dass durch die Zweiteiligkeit und die Auslagerung des Rastmittels der Raumbedarf des Getriebes als solches vergrößert wird.

Aus der DE 41 10 555 A1 ist eine Schaltvorrichtung mit einem auf einer zentralen Schaltwelle angeordneten Schaltfinger, der mit verschiebbaren Schaltschienen in Eingriff bringbar ist und der durch Vertiefungen in Verbindung mit einem federnd abgestützten Rastelement Rastierungen aufweist, die zur Gangvorwahl und zur Gangschaltung dienen, bekannt. Bei der dort offenbarten Schaltvorrichtung ist ein Rastelement mit Rastkugeln am Gehäuse des Getriebes montiert und wird durch eine Rastkontur am äußeren Umfang einer Hülse, welche an einer Welle montiert ist, geführt.

Aufgabe der vorliegenden Erfindung ist, einen Führungsmechanismus für ein Schaltgetriebe vorzustellen, der eine kompaktere und raumsparendere Bauweise und/oder einen einfacheren und damit preiswerteren Aufbau ermöglicht.

Diese Aufgabe wird durch einen Führungsmechanismus mit den Merkmalen des Anspruchs 1 gelöst. Unteransprüche sind auf vorteilhafte Weiterbildungen der Erfindung gerichtet.

Im Folgenden wird die Erfindung anhand eines Ausführungsbeispieles näher erläutert. Dabei zeigen die Figuren:
- Fig. 1:: einen erfindungsgemäßen Führungsmechanis- mus für ein Schaltgetriebe in räumlicher Darstellung;
- Fig. 2:: eine Abrollung von in einer Hülse des Führungsmechanismus geformten Rinnen;
- Fig. 3:: einen vergrößerten Teilausschnitt des Führungsmechanismus aus Fig. 1 in räum- licher Darstellung; und
- Fig. 4:: ein Detail des Führungsmechanismus aus Fig. 3;
- Fig. 5:: einen weiteren erfindungsgemäßen Füh- rungsmechanismus für ein Schaltgetriebe in einer Seitenansicht;
- Fig. 6:: den Führungsmechanismus aus Fig. 5 in einer räumlichen Darstellung mit Blick von unten;
- Fig. 7:: den Führungsmechanismus aus den Fig. 5 und 6 in einer Unteransicht.

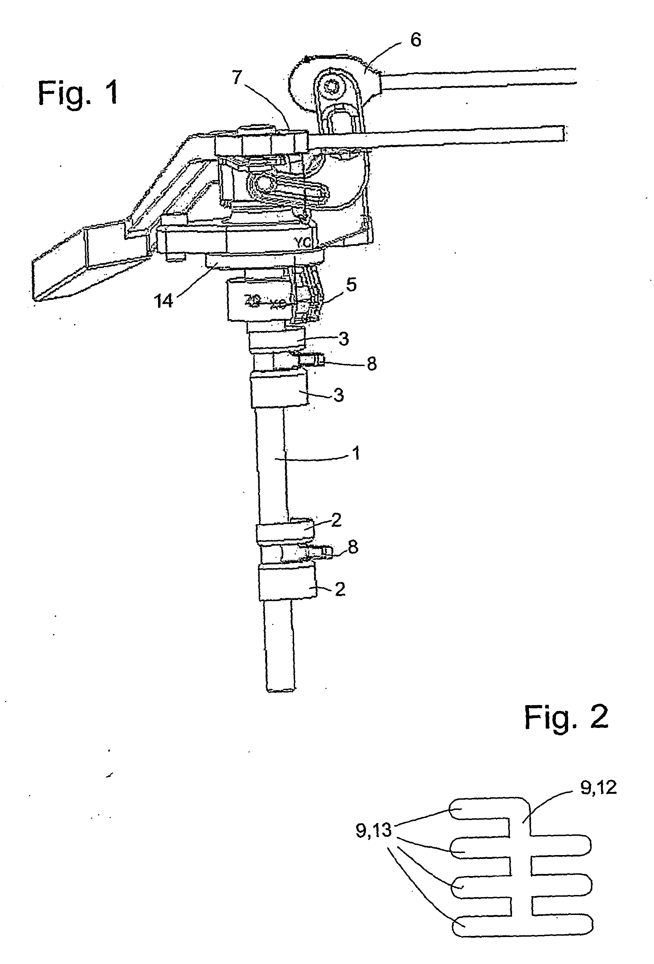

Ein Teil einer Schaltvorrichtung mit einem erfindungsgemäßen Führungsmechanismus für eine Schaltbewegung ist in Fig. 1 in räumlicher Darstellung gezeigt. Der gezeigte Teil umfasst im wesentlichen eine Welle 1, die drehbar und axial verschiebbar in ein Schaltgetriebe eingreift, um dort eine Umschaltbewegung zwischen verschiedenen Schaltstellungen anzutreiben. Das Schaltgetriebe selbst ist nicht dargestellt, da sein Aufbau dem Fachmann bekannt ist. Der in das Schaltgetriebe eingreifende Teil der Welle 1 ist abschnittsweise durch Muffen 2, 3 gehalten und geführt. Die Welle 1 ist innerhalb der Muffen 2, 3 drehbar und mit diesen axial verschiebbar. Zwischen den Muffen 2, 3 vorstehende Schaltfinger 8 greifen an Teilen des Schaltgetriebes an, um dessen Schaltbewegungen anzutreiben. Eine Bewegung der Welle 1 wird ihrerseits über einen Wählhebel 6 und einen Schalthebel 7 bewirkt, die an einem außerhalb des Schaltgetriebes liegenden Kopfabschnitt der Welle 1 angreifen.

An einem fest mit dem Gehäuse des Schaltgetriebes verbundenen Flansch 14 ist eine Hülse 5 angebracht. Diese kann die drehbar durch den Flansch 14 hindurchgeführte Welle auf ihrem gesamten Umfang umschließen; sie kann aber auch nur über einen Teil des Umfangs reichen, d.h. eher in Form einer Schürze ausgebildet sein. An einer der Welle 1 zugewandten Oberfläche der Hülse 5 sind rinnenförmige Vertiefungen 9 vorgesehen. Diese rinnenförmigen Vertiefungen 9 sind ein Abbild der möglichen Schaltwege, auf denen sich die Welle 1 beim Wechsel zwischen den Schaltstufen bewegen kann.

In Fig. 2 ist ein Abrollung dieser Rinnen 9 gezeigt. Die mehreren Rinnen 9 bilden ein Muster, das einer herkömmlichen geschlitzten Kulisse entspricht. Es ergibt eine Mehrzahl von parallelen Rinnen, auch als Seitenrinnen 13 bezeichnet, und eine zu den Seitenrinnen 13 senkrechte, diese kreuzende Hauptrinne 12.

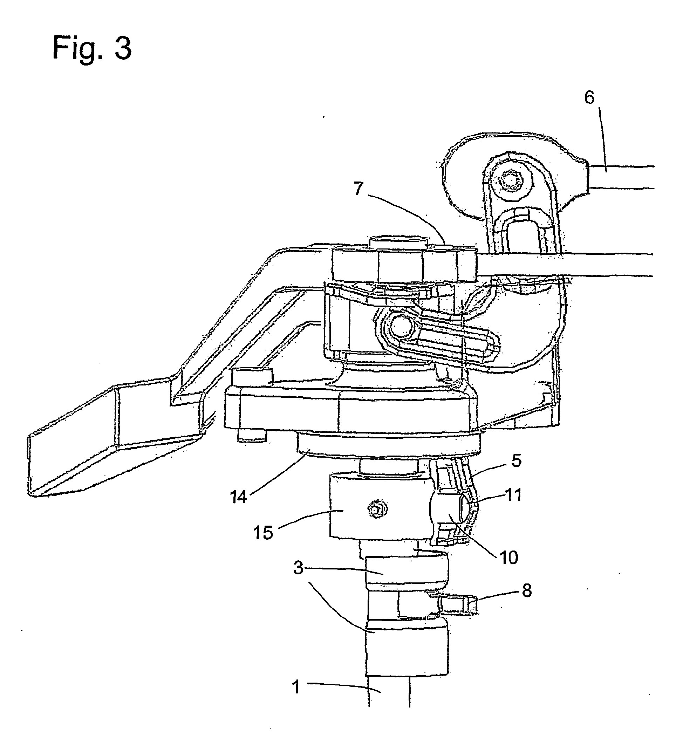

Fig.3 zeigt in größerem Maßstab den Kopfbereich der Welle 1 und die Hülse 5. In einem an der Welle 1 verschraubten Ring 15 ist eine Federkapsel 10 eingelassen, aus deren Ende eine Kugel 11 ragt. Die Kugel 11 rollt in den Rinnen 9 der Hülse 5 ab, wobei die Wege, die die Kugel 11 durchlaufen kann, durch den in Fig. 2 gezeigten Verlauf der Rinnen 9 vorgegeben sind.

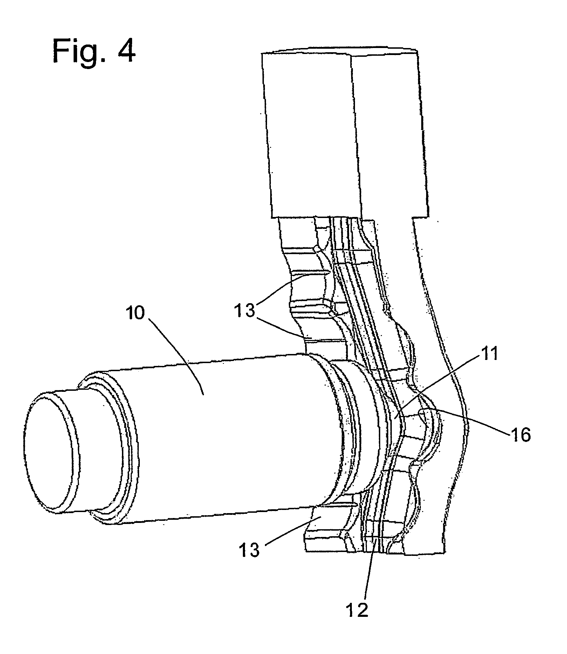

Fig.4 zeigt, abermals vergrößert, lediglich die Federkapsel 10 und einen Ausschnitt der Hülse 5 in ihrer Beziehung zueinander. Die Kugel 11 taucht in die Rinnen 9 ein und legt so die Schaltbewegungen fest, die die Welle 1 ausführen kann. Bei diesen Schaltbewegungen rollt die Kugel 11 unter dem Druck einer in der Federkapsel 10 untergebrachten Feder am Boden der Rinnen 9 entlang. Wenn die Kugel 11 das Ende einer der Seitenrinnen 13 erreicht, so entspricht dies einer Stellung der Welle 1, bei der im Schaltgetriebe ein Gang eingelegt ist; befindet sich die Kugel 11 in der Hauptrinne 12, so ist das Schaltgetriebe im Leerlauf.

Die Rinnen 12, 13 weisen an ihren Kreuzungsstellen abgerundete Kanten auf, so dass die Kugel 11 ohne Hindernisse bzw. ohne zu verkanten von der Hauptrinne 12 in eine der Seitenrinnen 13 und zurück wechseln kann.

Wie in Fig. 4 zu erkennen ist, hat die Hülse 5 einen in axialer Richtung der Welle 1 V-förmig geknickten Verlauf, so dass ein Punkt 16 am Boden der Hauptrille 12 weiter von der Achse der Welle 1 entfernt ist als der Rest der Hauptrinne 12. Zu diesem strebt die Kugel 11 unter dem Druck der Feder hin, wenn das Getriebe in Leerlaufstellung geschaltet ist, d. h. wenn sich die Kugel 11 in der Hauptrinne 12 befindet. Dadurch ist das Getriebe stabil in der Leerlaufstellung gehalten und kann keine ungewollten Schaltbewegungen aus der Leerlaufstellung heraus z.B. aufgrund von äußeren Erschütterungen ausführen.

In ähnlicher Weise wie in Fig. 4 für die Hauptrinne 12 gezeigt, können auch die Nebenrinnen 13 lokal variable Radien in Bezug auf die Achse der Welle 1 aufweisen. So können sie einerseits auf wenigstens einem zentralen Abschnitt ihrer Länge zur Hauptrinne hin zunehmenden Radius aufweisen, um so eine selbsttätige Bewegung der Welle 1 aus einer einem Gang entsprechenden Stellung zur Leerlaufstellung zu unterstützen, noch bevor die Kugel die Nebenrinne 13 verlassen hat.

Andererseits können sie auf einem peripheren Abschnitt jeweils einen zum Ende der Rinne 13 zunehmenden Radius aufweisen, der, sobald die Kugel diesen peripheren Abschnitt erreicht, eine selbsttätige Bewegung der Welle in eine einem eingelegten Gang entsprechende Stellung unterstützt.

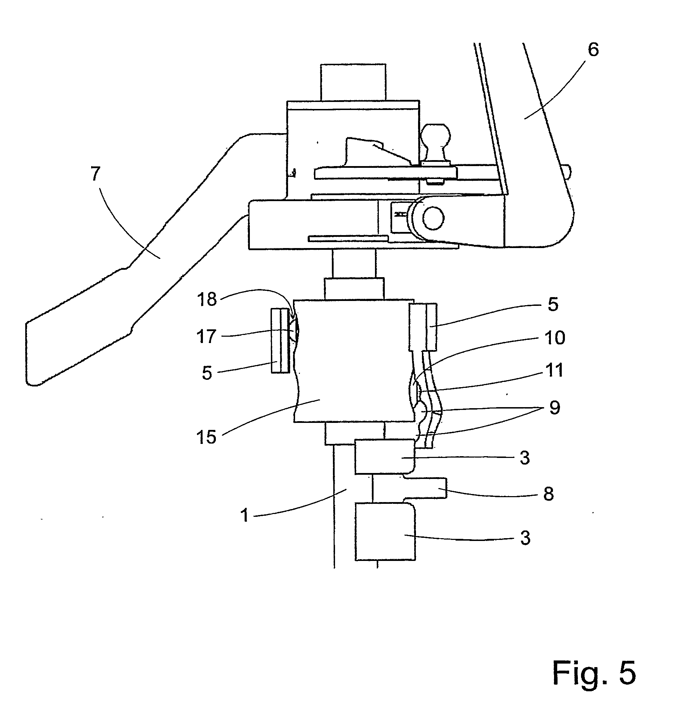

Fig. 5 zeigt einen Teil einer Schaltvorrichtung mit einem erfindungsgemäßen Führungsmechanismus in einer zweiten Ausführungsform. Die in Fig. 5 gezeigte Schaltvorrichtung weist zunächst dieselben Merkmale wie diejenige aus den Fig. 1 bis 4 auf. Gleiche Bezugsziffern bezeichnen dabei gleiche Teile. Der Führungsmechanismus nach Fig. 5 weist jedoch zusätzlich ein Rastelement 18 in Form einer Federkapsel 18 mit einer Kugel 17 auf, die mit weiteren, zweiten Konturen der Hülse 5 zusammenwirkt. Damit kann die Welle 1 in Drehrichtung in einer oder mehreren Drehstellungen eingerastet werden. Vorteil hiervon ist, dass die Kräfte, die zum Verrasten der Welle 1 in einer gewünschten Drehstellung notwendig sind, von der Federkapsel 10 und der Federkapsel 18 gemeinsam aufgebracht werden. Die Kraft, die zwischen der Kugel 11 und den Rinnen 9 im eingerasteten Zustand der Welle 1 wirkt, kann auf diese Weise geringer gehalten werden. Hierdurch wird die Lebensdauer des gesamten Führungsmechanismus erhöht. Die Federkapsel 18 ist wie die Federkapsel 10 in dem mit der Welle 1 verschraubten Ring 15 eingelassen.

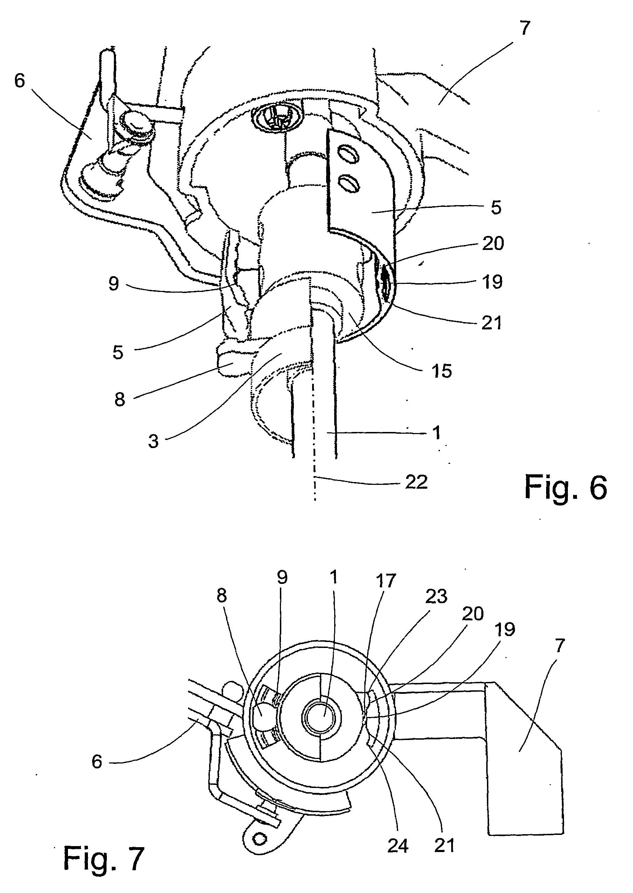

Fig. 6 zeigt eine rückwärtige Ansicht der Schaltvorrichtung aus Fig. 5 in einer räumlichen Darstellung von unten. Die Federkapseln 10 und 18 wurden in dieser Darstellung weggelassen. Fig. 7 zeigt den Kopfbereich der Welle 1 in einer Ansicht von unten, wobei die Kugel 17 der Federkapsel 18 sichtbar ist. Die der Kugel 17 zugewandte Oberfläche der Hülse 5 weist eine zentrale Rinne 19 auf, die sich parallel zur Längsachse 22 der Welle 1 erstreckt. Die Lage der Rinne 19 ist in Umfangrichtung der Hülse 5 dabei so gewählt, dass die Stellung, die die Welle 1 einnimmt, wenn sich die Kugel 17 der Federkapsel 18 in der Rinne 19 befindet, einem Leerlaufzustand des Schaltgetriebes entspricht. In diesem Zustand befindet sich die Kugel 11 in der in Fig. 2 gezeigten Hauptrinne 12.

Die Rinne 19 ist, wie in Fig. 6 gezeigt, von zwei seitlich abfallenden Rampen 20 und 21 umgeben. Wenn die Welle 1 um ihre Achse gedreht wird, rollt oder gleitet die Kugel 17 der Federkapsel 18 auf einer der Rampen 20 bzw. 21 ab, während gleichzeitig die Kugel 11 sich entlang einer der in Fig. 2 gezeigten Seitenrinnen 13 bewegt. Die Federkapsel 18 entspannt sich. Schließlich erreicht die Kugel 17 eine Ruheposition an einer Basis 23 oder 24 der Rampe 20 oder 21. Diese Ruheposition entspricht jeweils einem eingelegten Gang des Getriebes. Ein Schalten des Getriebes in einen gewünschten Gang wird dadurch erleichtert und somit der Schaltkomfort erhöht.

Wie aus Fig. 5 zu ersehen ist, sind die Federkapseln 10 und 18 in Umfangsrichtung der Welle 1 in einem Winkel von etwa 180° versetzt zueinander angeordnet. Die Kräfte, die einerseits von der Kugel 11 der Federkapsel 10 auf die Hülse 5 und andererseits von der Kugel 17 der Federkapsel 18 auf die Hülse 5 wirken, heben sich somit zumindest zum Teil untereinander auf, sodass hierdurch nur geringe oder keine Lagerkräfte resultieren. Zudem sind die Federkapsel 10 und die Federkapsel 18 in Längsrichtung der Welle 1 versetzt angeordnet. Hierdurch kann die im Getriebegehäuse für den lediglich die Federkapsel 10 umfassenden Führungsmechanismus vorgesehene Montageöffnung auch für den Führungsmechanismus mit der Federkapsel 18 verwendet werden. Dadurch wird die Montageöffnung klein gehalten, wodurch Spannungskonzentrationen im Getriebegehäuse vermieden werden.

### Bezugszeichenliste

- 1.: Welle
- 2.: Muffe
- 3.: Muffe
- 4.:
- 5.: Hülse
- 6.: Wählhebel
- 7.: Schalthebel
- 8.: Schaltfinger
- 9.: Rinne
- 10.: Federkapseln
- 11.: Kugel
- 12.: Hauptrinne
- 13.: Seitenrinne
- 14.: Flansch
- 15.: Ring
- 16.: Punkt
- 17.: Kugel
- 18.: Rastelement bzw. Federkapsel
- 19.: Rinne
- 20.: Rampe
- 21.: Rampen
- 22.: Längsachse der Welle 1
- 23.: Basis der Rampe 20
- 24.: Basis der Rampe 21

## Patentansprüche

1. Führungsmechanismus für eine Schaltbewegung in einem Schaltgetriebe mit einer entlang vordefinierter Wege drehbaren und axial verschiebbaren Welle (1), einer die Welle (1) wenigstens teilweise umgebenden, die Wege definierende erste Konturen (9; 12; 13) aufweisenden Hülse (5) sowie einem entsprechend der Bewegung der Welle (1) entlang der Hülse (5) bewegbaren Führungselement (11), wobei die ersten Konturen (9; 12; 13) als Rinnen (9; 12; 13) ausgebildet sind, das Führungselement (11) elastisch gegen einen Boden der Rinnen (9; 12; 13) gedrückt ist, und wenigstens eine der Rinnen (12) einen bezogen auf die Achse der Welle (1) variablen Radius aufweist **dadurch gekennzeichnet, dass** das Führungselement (11) an der Welle (1) montiert ist und der Führungsmechanismus als eine Baueinheit mit einem Flansch (14) ausgeführt ist, wobei der Flansch (14) an einem Gehäuse des Schaltgetriebes angebracht werden kann.

2. Führungsmechanismus nach Anspruch 1, **dadurch gekennzeichnet, dass** die Rinnen (9; 12; 13) einander kreuze, wobei an den Kreuzungsstellen auftretende Kanten abgerundet sind.

3. Führungsmechanismus nach einem der vorhergehenden Ansprüche, **dadurch gekennzeichnet, dass** das Führungselement (11) eine Kugel (11) ist.

4. Führungsmechanismus nach einem der vorhergehenden Ansprüche, **dadurch gekennzeichnet, dass** wenigstens eine der Rinnen (12) einen Punkt (16) mit lokal maximalem Radius aufweist, wobei die Stellung, die die Welle einnimmt, wenn sich das Führungselement (11) an dem Punkt (16) mit lokal maximalem Radius befindet, einem Leerlaufzustand des Schaltgetriebes entspricht.

5. Führungsmechanismus nach einem der vorhergehenden Ansprüche, **dadurch gekennzeichnet, dass** das Führungselement (11) von einer Feder gegen den Boden der Rinnen (9; 12; 13) gedrückt ist.

6. Führungsmechanismus nach einem der vorhergehenden Ansprüche, **gekennzeichnet durch** ein Rastelement (18) zum Verrasten der Welle (1) in einer oder mehreren gewünschten Positionen in Drehrichtung.

7. Führungsmechanismus nach Anspruch 6, **dadurch gekennzeichnet, dass** das Rastelement (18) mit einer zweiten Kontur (19; 20; 21) der Hülse (5) zusammenwirkt.

8. Führungsmechanismus nach Anspruch 7, **dadurch gekennzeichnet, dass** die zweite Kontur (19; 20; 21) durch mindestens eine Rinne (19) gebildet ist, die in etwa senkrecht zu zumindest einer der Rinnen (9; 12; 13) der ersten Konturen (9; 12; 13) angeordnet ist.

9. Führungsmechanismus nach Anspruch 7 oder 8, **dadurch gekennzeichnet, dass** die zweite Kontur (19; 20; 21) durch mindestens eine Rinne (19) gebildet ist, die in etwa senkrecht zu zumindest einer der Rinnen (9; 12; 13) der ersten Konturen (9; 12; 13) parallel zur Längsachse (21) der Welle (1) angeordnet ist.

10. Führungsmechanismus nach Anspruch 8 oder 9, **dadurch gekennzeichnet, dass** die Stellung, die die Welle (1) einnimmt, wenn sich das Rastelement (18) in der Rinne (19) der zweiten Kontur (19; 20; 21) befindet, einem Leerlaufzustand des Schaltgetriebes entspricht.

11. Führungsmechanismus nach Anspruch 8 bis 10, **dadurch gekennzeichnet, dass** die Rinne (19) der zweiten Kontur (19; 20; 21) von zwei seitlich abfallenden Rampen (20; 21) umgeben ist und dass die Stellung, die die Welle (1) einnimmt, wenn sich das Rastelement (18) an einer der Basen (22; 23) der Rampen (20; 21) befindet, einem Zustand des Schaltgetriebes entspricht, in welchem ein Gang eingelegt ist.

12. Führungsmechanismus nach einem der Ansprüche 7 bis 11, **dadurch gekennzeichnet, dass** das Führungselement (11) und das Rastelement (18) in Umfangsrichtung der Welle (1) versetzt angeordnet sind, insbesondere in einem Winkel von etwa 180°.

13. Führungsmechanismus nach einem der Ansprüche 7 bis 12, **dadurch gekennzeichnet, dass** das Führungselement (11) und das Rastelement (18) in Längsrichtung der Welle (1) versetzt angeordnet sind.

14. Getriebe, insbesondere manuell schaltbares Getriebe, **gekennzeichnet durch** einen Führungsmechanismus nach einem oder mehreren der vorhergehenden Ansprüche.

## Claims

1. A guide mechanism for a shifting movement in a gearbox, comprising an axially displaceable shaft (1) which can be displaced along a predefined path in a rotating manner, a bushing (5) which at least partially surrounds the shaft (1) and has first contours (9; 12; 13) defining the paths, and a guide element (11) which can be moved along the bushing (5) according to the movement of the shaft (1), with the first contours (9; 12; 13) being arranged as grooves (9; 12; 13), the guide element (11) is pressed elastically against a base of the grooves (9; 12; 13), and at least one of the grooves (12) has a variable radius in relation to the axis of the shaft (1), **characterized in that** the guide element (11) is mounted on the shaft (1) and the guide mechanism is arranged as a modular unit with a flange (14), with the flange (14) being attachable to a housing of the gearbox.

2. A guide mechanism according to claim 1, **characterized in that** the grooves (9; 12; 13) cross one another, with edges occurring at the crossing points being rounded off.

3. A guide mechanism according to one of the preceding claims, **characterized in that** the guide element (11) is a ball (11).

4. A guide mechanism according to one of the preceding claims, **characterized in that** at least one of the grooves (12) has a point (16) with locally maximum radius, with the position assumed by the shaft when the guide element (11) is disposed at the point (16) with locally maximum radius corresponding to an idle state of the gearbox.

5. A guide mechanism according to one of the preceding claims, **characterized in that** the guide element (11) is pressed by a spring against the base of the grooves (9; 12; 13).

6. A guide mechanism according to one of the preceding claims, **characterized by** a latching element (18) for latching the shaft (1) in one or several desired positions in the direction of rotation.

7. A guide mechanism according to claim 6, **characterized in that** the latching element (18) cooperates with a second contour (19; 20; 21) of the bushing (5).

8. A guide mechanism according to claim 7, **characterized in that** the second contour (19; 20; 21) is formed by at least one groove (19) which is arranged approximately perpendicularly in relation to at least one of the grooves (9; 12; 13) of the first contours (9; 12; 13).

9. A guide mechanism according to claim 7 or 8, **characterized in that** the second contour (19; 20; 21) is formed by at least one groove (19) which is arranged approximately perpendicularly in relation to at least one of the grooves (9; 12; 13) of the first contours (9; 12; 13) parallel to the longitudinal axis (21) of the shaft (1).

10. A guide mechanism according to claim 8 or 9, **characterized in that** the position which is assumed by the shaft (1) when the latching element (18) is disposed in the groove (19) of the second contour (19; 20; 21) corresponds to an idle state of the gearbox.

11. A guide mechanism according to claim 8 to 10, **characterized in that** the groove (19) of the second contour (19; 20; 21) is surrounded by two laterally dropping ramps (20; 21), and that the position which is assumed by the shaft (1) when the latching element (18) is disposed on one of the bases (22; 23) of the ramps (20; 21) corresponds to a state of the gearbox in which a gear has been engaged.

12. A guide mechanism according to one of the claims 7 to 11, **characterized in that** the guide element (11) and the latching element (18) are arranged in an offset manner in the circumferential direction of the shaft (1), especially at an angle of approx. 180°.

13. A guide mechanism according to one of the claims 7 to 12, **characterized in that** the guide element (11) and the latching element (18) are arranged in an offset manner in the longitudinal direction of the shaft (1).

14. A transmission, especially a manual transmission, **characterized by** a guide mechanism according to one or several of the preceding claims.

## Revendications

1. Mécanisme de guidage pour un mouvement de changement de rapport dans une boîte de vitesses avec un arbre (1) pouvant tourner sur une course prédéfinie et capable de translation axiale, une douille (5) entourant au moins partiellement l'arbre (1) et présentant des premiers contours (9 ; 12 ; 13) définissant la course et un élément de guidage (11) déplaçable le long de la douille (5) en fonction du mouvement de l'arbre (1), dans lequel les premiers contours (9 ; 12 ; 13) sont conformés comme des gorges (9 ; 12 ; 13), l'élément de guidage (11) est pressé de façon élastique contre un fond des gorges (9 ; 12 ; 13) et au moins une des gorges (12) présente un rayon variable par rapport à l'axe de l'arbre (1), **caractérisé en ce que** l'élément de guidage (11) est monté sur l'arbre (1) et le mécanisme de guidage est réalisé comme une unité de construction avec une bride (14), laquelle bride (14) peut être appliquée sur un carter de la boîte de vitesse.

2. Mécanisme de guidage selon la revendication 1, **caractérisé en ce que** les gorges (9 ; 12 ; 13) se croisent, les arêtes formées aux points d'intersection étant arrondies.

3. Mécanisme de guidage selon l'une des revendications précédentes, **caractérisé en ce que** l'élément de guidage (11) est une bille (11).

4. Mécanisme de guidage selon l'une des revendications précédentes, **caractérisé en ce qu'**au moins une des gorges (12) présente un point (16) de rayon localement maximal, la position prise par l'arbre quand l'élément de guidage (11) se trouve au point (16) de rayon localement maximal correspondant à l'état de point mort de la boîte de vitesses.

5. Mécanisme de guidage selon l'une des revendications précédentes, **caractérisé en ce que** l'élément de guidage (11) est poussé par un ressort contre le fond des gorges (9 ; 12 ; 13).

6. Mécanisme de guidage selon l'une des revendications précédentes, **caractérisé en ce qu'**il comporte un élément d'enclenchement (18) pour enclencher l'arbre (1) dans une ou plusieurs positions souhaitées dans le sens de la rotation.

7. Mécanisme de guidage selon la revendication 6, **caractérisé en ce que** l'élément d'enclenchement (18) coopère avec une deuxième contour (19 ; 20; 21) de la douille (5).

8. Mécanisme de guidage selon la revendication 7, **caractérisé en ce que** le deuxième contour (19 ; 20 ; 21) est formé par au moins une gorge (19) qui est approximativement perpendiculaire à au moins une des gorges (9 ; 12 ; 13) des premiers contours (9 ; 12 ; 13).

9. Mécanisme de guidage selon la revendication 7 ou 8, **caractérisé en ce que** le deuxième contour (19 ; 20; 21) est formé par au moins une gorge (19) qui est approximativement perpendiculaire à au moins une des gorges (9 ; 12 ; 13) des premiers contours (9 ; 12 ; 13) et disposée parallèlement à l'axe longitudinal (21) de l'arbre (1).

10. Mécanisme de guidage selon la revendication 8 ou 9, **caractérisé en ce que** la position que prend l'arbre (1) quand l'élément d'enclenchement (18) se trouve dans la gorge (19) du deuxième contour (19 ; 20 ; 21) correspond à un état de point mort de la boîte de vitesses.

11. Mécanisme de guidage selon la revendication 8 ou 10, **caractérisé en ce que** la gorge (19) du deuxième contour (19 ; 20 ; 21) est entourée par deux rampes (20 ; 21) descendant sur les côtés et **en ce que** la position prise par l'arbre (1) quand l'élément d'enclenchement (18) se trouve sur l'une des bases (22 ; 23) des rampes (20 ; 21) correspond à un état de la boîte de vitesse dans lequel une vitesse est engagée.

12. Mécanisme de guidage selon l'une des revendications 7 à 11, **caractérisé en ce que** l'élément de guidage (11) et l'élément d'enclenchement (18) sont décalés dans le sens de la circonférence de l'arbre (1), en particulier selon un angle d'environ 180°.

13. Mécanisme de guidage selon l'une des revendications 7 à 12, **caractérisé en ce que** l'élément de guidage (11) et l'élément d'enclenchement (18) sont décalés dans le sens longitudinal de l'arbre (1).

14. Boîte de vitesses, en particulier boîte de vitesses manuelle, **caractérisée en ce qu'**elle comporte un mécanisme de guidage selon une ou plusieurs des revendications précédentes.
